# EUROPÄISCHE PATENTSCHRIFT

(11) **EP 3 112 629 B1**
(45) Veröffentlichungstag und Bekanntmachung des Hinweises auf die Patenterteilung: **18.07.2018**
(21) Anmeldenummer: 16168931.0
(22) Anmeldetag: 10.05.2016
(51) Int. Cl.: F01N 3/20, F01N 3/28, F01N 13/18

(54) **ABGASMISCHERANORDNUNG**
EXHAUST GAS MIXER ASSEMBLY
SYSTEME MELANGEUR DE GAZ D'ECHAPPEMENT

(30) Priorität: 29.06.2015 DE 102015110426
(43) Veröffentlichungstag der Anmeldung: 04.01.2017
(73) Patentinhaber: Eberspächer Exhaust Technology GmbH & Co. KG, 66539 Neunkirchen (DE)
(72) Erfinder: Ferront, Hervé, 73728 Esslingen (DE); Sang, Wei, 73732 Esslingen (DE); Binder, David, 73728 Esslingen (DE)
(74) Vertreter: RLTG

(56) Entgegenhaltungen:
- WO-A1-2011/110885
- DE-A1-102011 077 156
- FR-A1- 2 928 687
- FR-A1- 2 966 513
- FR-A1- 3 010 137

## Beschreibung

Die vorliegende Erfindung betrifft eine Abgasmischeranordnung gemäß dem Oberbegriff des Anspruchs 1, in welcher die eine Brennkraftmaschine, beispielsweise eines Kraftfahrzeugs, verlassenden Abgase mit Zusatzstoffen, wie z. B. Harnstoff, gemischt werden können, um den Schadstoffausstoß zu mindern.

Bei der Einleitung von Zusatzstoffen in Abgase ist es bekannt, in den Abgasströmungsweg Abgasmischer mit einer Mehrzahl von flügelartigen Ablenkflächen einzubringen, um eine Verwirbelung der Abgase und somit eine verbesserte Durchmischung mit in die Abgase eingeleiteten Zusatzstoffen zu erreichen.

Eine Abgasmischeranordnung gemäß dem Oberbegriff des Anspruchs 1 ist aus der FR 2 966 513 A1 bekannt. Bei dieser Abgasmischeranordnung wird in einem krümmungsartig ausgebildeten Rohrbereich einer Abgasanlage eine Wendelströmung des darin strömenden Abgases erzeugt. Zusatzstoff wird in einer Zusatzstoff-Einspritzrichtung entlang einer Einspritzachse eingespritzt, welche von der Abgasströmung wendelartig umströmt wird.

Bei einer aus der FR 2 928 687 A1 bekannten Abgasmischeranordnung wird ein Teil des in einer Hauptströmungsrichtung auf die Abgasmischeranordnung zu strömenden Abgasstroms in eine bezüglich der Hauptströmungsrichtung seitliche Ausbuchtung eines Gehäuses der Mischeranordnung geleitet und dort auf eine Richtung einer Achse axial ausgedehnte spiralartige Strömungsbahn gezwungen. In Richtung der von der so erzeugten spiral- bzw. wendelartigen Strömung umströmten Achse wird ein Reaktionsmittel in diesen Teil des Abgasstroms eingeleitet.

Es ist die Aufgabe der vorliegenden Erfindung, eine Abgasmischeranordnung bereitzustellen, bei welcher bei einfachem Aufbau eine optimierte Durchmischung der von einer Brennkraftmaschine abgegebenen Abgase mit in die Abgase eingeleiteten Zusatzstoffen erreicht wird.

Erfindungsgemäß wird diese Aufgabe gelöst durch eine Abgasmischeranordnung zur Durchmischung von Abgasen einer Brennkraftmaschine mit Zusatzstoff gemäß Anspruch 1. Diese umfasst einen Abgasströmungskanal mit einem stromaufwärtigen Eintrittsbereich und einem stromabwärtigen Austrittsbereich, wobei der Abgasströmungskanal zwischen dem Eintrittsbereich und dem Austrittsbereich wenigstens bereichsweise wendelartig gekrümmt ist.

Durch das Bereitstellen eines Abgasströmungskanals mit wendelartig gekrümmter Struktur werden eine größere Durchmischungsstrecke und aufgrund der beim Durchströmen der Abgase zwangsweise auftretenden Umlenkung derselben eine Verwirbelung erhalten, ohne dass dadurch eine wesentliche Erhöhung des Abgasströmungswiderstands entsteht. Werden in diesen Bereich, in welchem eine durch die Abgasablenkung generierte Verwirbelung entsteht, Zusatzstoffe eingeleitet, kann ohne der Notwendigkeit, einen zusätzlichen Abgasmischer in den Strömungsweg einzugliedern, eine verbesserte Durchmischung der Abgase mit dem in diese eingeleiteten Zusatzstoff erreicht werden.

Um einen kompakten, gleichwohl die gewünschte Ablenkung und damit Verwirbelung generierenden Aufbau zu erreichen, verläuft der Abgasströmungskanal in einem auf den Eintrittsbereich folgenden ersten Strömungskanalabschnitt im Wesentlichen in einer Strömungskanalebene und weist anschließend an den ersten Strömungskanalabschnitt einen aus der Strömungskanalebene herausführenden zweiten Strömungskanalabschnitt auf. Dabei kann beispielsweise vorgesehen sein, dass im ersten Strömungskanalabschnitt eine Strömungsumlenkung im Bereich von 150° bis 210°, vorzugsweise etwa 180°, erfolgt, oder/und dass im zweiten Strömungskanalabschnitt eine Ablenkung aus der Strömungskanalebene im Bereich 70° bis 110°, vorzugsweise etwa 90°, erfolgt.

Um bei einfachem Aufbau die wendelartig gekrümmte Struktur des Abgasströmungskanals bereitstellen zu können, umfasst ein Mischergehäuse ein Zentralgehäuseteil, ein mit dem Zentralgehäuseteil einen vom Eintrittsbereich weg zu einem Durchtrittsbereich führenden ersten Strömungskanalbereich begrenzendes erstes Seitengehäuseteil und ein mit dem Zentralgehäuse einen von dem Durchtrittsbereich zum Austrittsbereich führenden zweiten Strömungskanalbereich begrenzendes zweites Seitengehäuseteil. Dabei können vorteilhafterweise alle drei Gehäuseteile als Blechumformteile bereitgestellt sein, die entlang jeweiliger Randbereiche miteinander beispielsweise durch Punktschweißen oder durch eine Laserschweißnaht oder dergleichen verbunden werden können.

Um in einfacher Weise die Strömungsverbindung zwischen den beiden Strömungskanalbereichen herstellen zu können, wird vorgesehen, dass der Durchtrittsbereich wenigstens eine in dem Zentralgehäuseteil ausgebildete Durchtrittsöffnung umfasst. Insbesondere kann dabei vorgesehen sein, dass die wenigstens eine Durchtrittsöffnung im Bereich einer zylinderartigen oder trichterartigen Ausformung des Zentralgehäuseteils ausgebildet ist.

Der zwischen dem Zentralgehäuseteil und dem ersten Seitengehäuseteil bereitgestellte erste Strömungskanalbereich umfasst den ersten Strömungskanalabschnitt und den zweiten Strömungskanalabschnitt, also denjenigen Teil des Abgasströmungskanals, in welchem einerseits eine substantielle Umlenkung, jedoch im Wesentlichen in einer Strömungsebene erfolgt und dann die Ablenkung der Abgase aus der Strömungsebene heraus erfolgt.

Um die erfindungsgemäße Abgasmischeranordnung in die im Allgemeinen langgestreckte Struktur eines Abgasführungssystems in einfacher Weise eingliedern zu können, wird vorgeschlagen, dass eine Abgasströmungsrichtung im Eintrittsbereich im Wesentlichen einer Abgasströmungsrichtung im Austrittsbereich entspricht.

Die Abgasmischeranordnung umfasst vorzugsweise ferner eine Zusatzstoffeinspritzanordnung zum Einspritzen von Zusatzstoff nahe dem Eintrittsbereich des Abgasströmungskanals. Somit wird gewährleistet, dass die Einleitung von Zusatzstoff in einem Bereich erfolgt, der stromaufwärts desjenigen Bereichs liegt oder bereits in demjenigen Bereich liegt, in welchem durch Ablenkung der Abgase aufgrund der wendelartigen Struktur des Abgasströmungskanals eine deutliche Verwirbelung generiert wird.

Vorzugsweise ist die Zusatzstoffeinspritzanordnung derart angeordnet, dass sie Zusatzstoff im Wesentlichen in den ersten Strömungskanalabschnitt einspritzt. Wenn dabei Zusatzstoff im Wesentlichen in einer Richtung eingespritzt wird, welche einer Haupt-Strömungsrichtung der Verbrennungsabgase im Abgasströmungskanal im Bereich der Zusatzstoffeinspritzung entspricht, erfahren die in die Abgase eingeleiteten Zusatzstoffe zur verbesserten Vermischung mit diesen ebenfalls eine durch die gekrümmte Struktur des Abgasströmungskanals hervorgerufene Umlenkung und werden dabei mit den Abgasen vermischt.

Eine besonders effiziente Durchmischung der Abgase mit den in diese eingeleiteten Zusatzstoffen bei gleichwohl kompakter Ausgestaltung der erfindungsgemäßen Abgasmischeranordnung kann erreicht werden, wenn der Abgasströmungskanal zwischen dem Eintrittsbereich und dem Austrittsbereich im Wesentlichen eine Windung aufweist.

Die vorliegende Erfindung wird nachfolgend mit Bezug auf die beiliegenden Figuren detailliert beschrieben. Es zeigt:
- Fig. 1: eine Abgasmischeranordnung in einem Abgasführungssystem einer Brennkraftmaschine stromaufwärts einer Katalysatoranordnung bzw. eines Partikelfilters;
- Fig. 2: in ihren Darstellungen a), b) und c) drei zum Aufbau der Abgasmischeranordnung der Fig. 1 miteinander zu verbindende Gehäuseteile;
- Fig. 3: in ihren Darstellungen a), b) und c) die drei Gehäuseteile der Abgasmischeranordnung in anderer perspektivischer Ansicht;
- Fig. 4: die Abgasmischeranordnung der Fig. 1, wobei zur Veranschaulichung der Srömungsführung das in den Fig. 2a) und 3a) dargestellte erste Seitengehäuseteil entfernt ist;

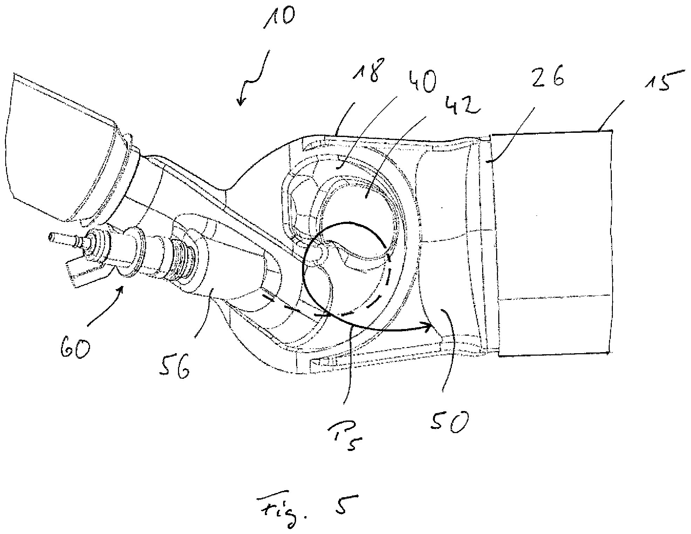

- Fig. 5: eine der Fig. 4 entsprechende Darstellung, bei welcher das in den Fig. 2c) und 3c) gezeigte zweite Seitengehäuseteil entfernt ist.

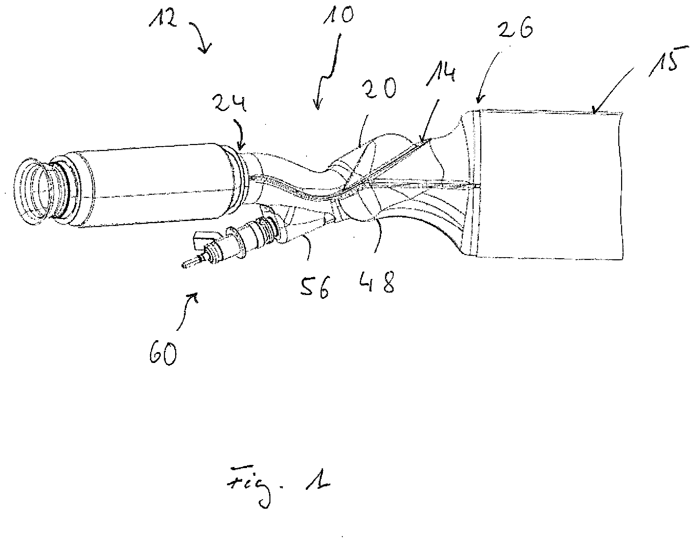

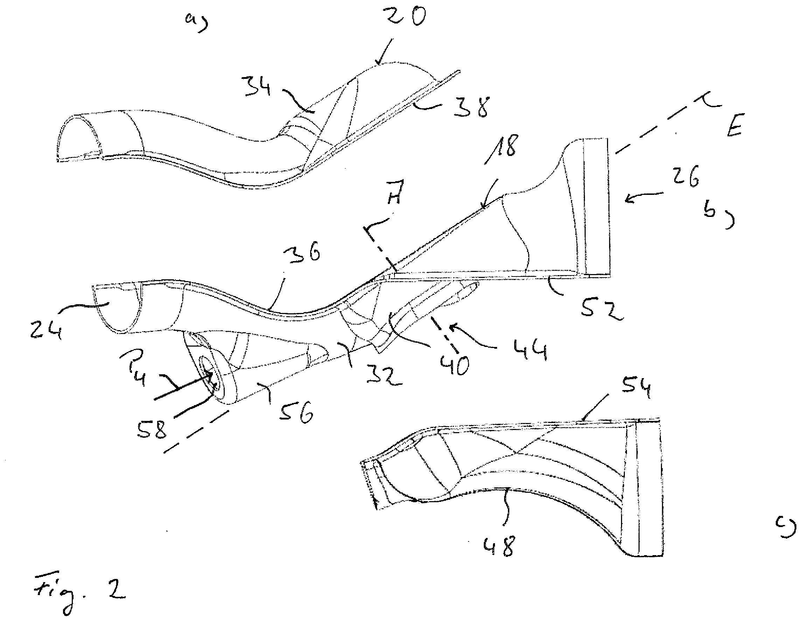

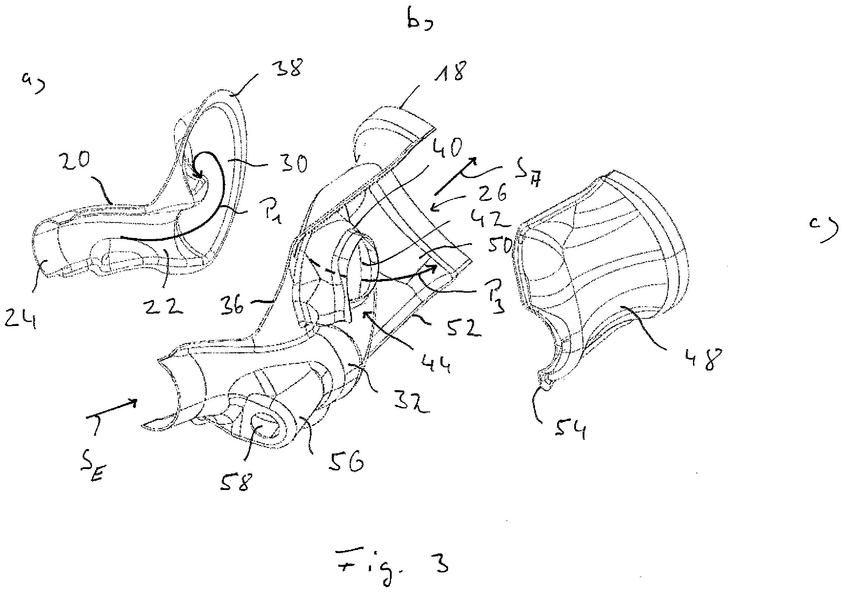

In Fig. 1 ist eine erfindungsgemäß aufgebaute Abgasmischeranordnung 10 eingegliedert in ein Abgasführungssystem 12 einer Brennkraftmaschine eines Fahrzeugs stromaufwärts einer allgemein mit 15 bezeichneten Katalysatoranordnung bzw. eines Partikelfilters angeordnet. Die Abgasmischeranordnung 10 umfasst ein Mischergehäuse 14, das im Wesentlichen mit drei Gehäuseteilen 18, 20, 48 aufgebaut ist. Diese drei Gehäuseteile 18, 20, 48 sind in den Fig. 2 und 3 in verschiedenen Darstellungen gezeigt und werden im Folgenden detailliert beschrieben.

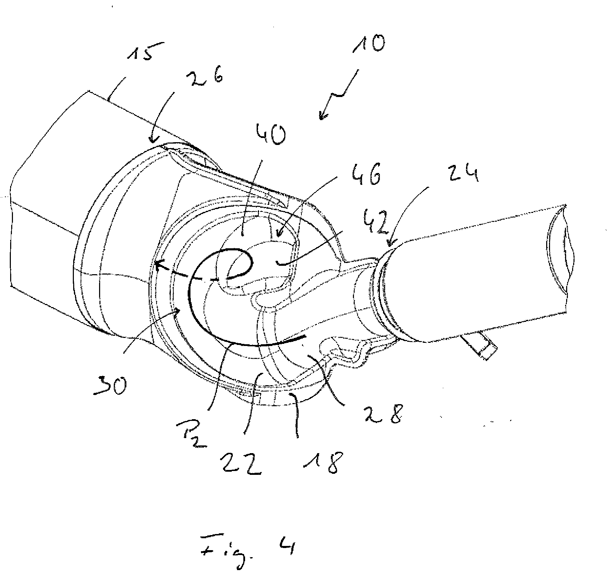

Ein vorzugsweise als Blechumformteil bereitgestelltes Zentralgehäuseteil 18 begrenzt zusammen mit einem vorzugsweise ebenfalls als Blechumformteil bereitgestellten ersten Seitengehäuseteil 20 einen in Fig. 4 erkennbaren, allgemein mit 22 bezeichneten ersten Strömungskanalbereich eines von einem Eintrittsbereich 24 zu einem Austrittsbereich 26 führenden Abgasströmungskanals 28 der Abgasmischeranordnung 10.

Der erste Strömungskanalbereich 22 umfasst folgend auf den einen näherungsweise geradlinig sich erstreckenden Kanalbereich bereitstellenden Eintrittsbereich 24 einen ersten Strömungskanalabschnitt 30, in welchem der Abgasstrom, wie durch Strömungspfeile P₁ in Fig. 3a) und P₂ in Fig. 4 veranschaulicht, um etwa 180° umgelenkt werden. Dieser erste Strömungskanalabschnitt 30 liegt, wie die Fig. 2b) dies veranschaulicht, im Wesentlichen in einer Strömungskanalebene E. Hier kann beispielsweise der mittlere Strömungsfaden bzw. im Wesentlich ein geometrischer Querschnittsmittelpunkt des ersten Strömungskanalabschnitts 30 als im Wesentlichen in der Ebene E liegend betrachtet werden. Dabei kann durch schalenartige Ausformungen 32, 34 des Zentralgehäuseteils 18 bzw. des ersten Seitengehäuseteils 20 im Wesentlichen die Hälfte des Strömungsquerschnitts des ersten Strömungskanalabschnitts 30 bzw. des ersten Strömungskanalbereichs 22 durch das Zentralgehäuseteil 18 und die andere Hälfte durch das erste Seitengehäuseteil 20 bereitgestellt bzw. begrenzt sein.

Die beiden Gehäuseteile 18, 20 können in zur gegenseitigen Anlage ausgebildeten Randbereichen 36, 38 abgasdicht, beispielsweise durch Verschweißung, miteinander verbunden sein.

Im Zentralgehäuseteil 18 ist am Endbereich der den ersten Strömungskanalabschnitt begrenzenden Ausformung 32 eine zylinderartige bzw. trichterartige Ausformung 40 gebildet, welche eine aus dem ersten Strömungskanalbereich 22 herausführende Durchtrittsöffnung 42 eines Durchtrittsbereichs 44 definiert. Diese Ausformung 40 begrenzt im Wesentlichen einen an den im Wesentlichen in der Abgasströmungsebene E liegenden ersten Strömungskanalabschnitt 30 angrenzenden zweiten Strömungskanalabschnitt 46 des ersten Strömungskanalbereichs 22. In diesem auf den ersten Strömungskanalabschnitt 30 folgenden zweiten Strömungskanalabschnitt 46 werden die zunächst im ersten Strömungskanalabschnitt 30 näherungsweise um 180° umgelenkten Abgase aus der Abgasströmungsebene E herausgeführt, beispielsweise unter einem Winkel von etwa 90°. Dies veranschaulicht der Strömungspfeil P₃ in Fig. 3b).

Die durch den in der trichterartigen Ausformung 40 bereitgestellten zweiten Strömungskanalabschnitt und durch die Durchtrittsöffnung 42 hindurchströmenden Abgase gelangen in einen durch das Zentralgehäuseteil 18 und ein zweites Seitengehäuseteil 48 begrenzten zweiten Strömungskanalbereich 50. Der zweite Strömungskanalbereich 50 schließt somit an den ersten Strömungskanalbereich 22 an und führt die Abgase in Richtung zum Austrittsbereich 26. Dabei werden die durch die Durchtrittsöffnung 42 hindurchtretenden Abgase durch das zweite Seitengehäuseteil 48 so umgelenkt (siehe Pfeil P₅), dass sie am Austrittsbereich 26 eine Austrittsströmungsrichtung S_{A} aufweisen, welche näherungsweise einer Eintrittsströmungsrichtung S_{E} am Eintrittsbereich 24 entspricht.

Auch das zweite Seitengehäuseteil 48 und das Zentralgehäuseteil 18 können im Bereich einander gegenüberliegend zu positionierender Randbereiche 52, 54 gegen den Austritt von Abgasen abgedichtet miteinander verbunden werden, beispielsweise durch Schweißen.

Durch die drei Gehäuseteile 18, 20, 48 wird der Abgasströmungskanal 28 mit einer allgemein wendelartigen, schraubenartigen bzw. schneckenartigen Geometrie bereitgestellt. Diese wendelartige Geometrie weist im Wesentlichen eine Windung auf, wobei diese Windung beispielsweise um eine zu einer Öffnungsmittenachse A der Durchtrittsöffnung 42 beispielsweise im Wesentlichen parallele, fiktive Windungsachse geführt ist und bei dieser Windung die Abgase sowohl um diese fiktive Windungsachse herum, als auch in Richtung dieser Windungsachse abgelenkt werden. Dabei kann der Abstand des Abgasströmungskanals 28, beispielsweise dessen geometrisches Querschnittsmittel oder des mittleren Strömungsfadens, zu dieser fiktiven Windungsachse im Wesentlichen konstant oder in Strömungsrichtung variierend sein.

Im stromaufwärtigen Bereich des Abgasströmungskanals 28, also im Wesentlichen im Übergangsbereich vom Eintrittsbereich 24 zum ersten Störmungskanalabschnitt 30, ist am Zentralgehäuseteil 18 eine Ausformung 56 mit einer Öffnung 58 vorgesehen. Durch diese Öffnung 58 hindurch kann eine Einspritzdüse einer Zusatzstoffeinspritzanordnung 60 geführt bzw. in das Mischergehäuse 14 eingesetzt sein. Diese Zusatzstoffeinspritzanordnung 60 kann dazu genutzt werden, Zusatzstoff, wie z. B. Harnstoff, in den Abgasstrom einzuspritzen, um somit durch eine entsprechende Reaktion in der stromabwärts folgenden Katalysatoranordnung eine Schadstoffverringerung zu bewirken.

Eine Haupt-Einspritzrichtung der Zusatzstoffeinspritzanordnung kann der durch den Strömungspfeil P₄ veranschaulichten Richtung entsprechen. Man erkennt, dass dieser nahe dem Eintrittsbereich 24 positionierte Ort der Zusatzstoffeinspritzung so angeordnet ist, dass Zusatzstoff im Wesentlichen in den stromaufwärtigen Teil des ersten Strömungskanalabschnitts 30 eingespritzt wird, und zwar in einer Richtung, die näherungsweise auch der Haupt-Strömungsrichtung der Abgase im Abgasströmungskanal 28 in diesem Bereich entspricht. Der Zusatzstoff strömt somit im Wesentlichen zusammen mit den im Abgasströmungskanal 28 geführten Abgase in einer Tangentialströmungsrichtung in den den Abgasstrom etwa um 180° umlenkenden ersten Strömungskanalabschnitt 30 ein. Bei dieser Umlenkung erfolgt eine Verwirbelung und damit eine starke Vermischung der Abgase mit dem in diese eingespritzten Zusatzstoff, so dass am Austrittsbereich 26 ein im Wesentlichen homogenes Gemisch aus Abgasen und Zusatzstoff austritt.

Mit dem erfindungsgemäßen Aufbau einer Abgasmischeranordnung wird bei konstruktiv einfacher Ausführung eine effiziente, homogene Durchmischung von Abgasen und in diese eingespritztem Zusatzstoff erlangt, ohne dass dabei eine wesentliche Erhöhung des Strömungswiderstands auftritt. Gleichwohl sei darauf hingewiesen, dass bei der erfindungsgemäßen Abgasmischeranordnung in den Abgasströmungskanal 28 insbesondere stromabwärts des Orts der Einspritzung des Zusatzstoffs ein zusätzlicher Mischer, beispielsweise mit einer Mehrzahl von flügelartigen Ablenkflächen, integriert werden kann. Ferner sei darauf hingewiesen, dass selbstverständlich eines oder mehrere der dargestellten Gehäuseteile auch aus einer Mehrzahl von Einzelteilen gebildet sein kann.

Bei dem erfindungsgemäßen Aufbau der Abgasmischeranordnung bildet das Zentralgehäuseteil 18 eine Trennung bzw. eine Trennwand zwischen den beiden Strömungskanalbereichen 22, 50. Dabei kann durch entsprechende Ausgestaltung, beispielsweise Bereitstellung weiterer Ausformungen, dieses Zentralgehäuseteil 18 auch als Mischplatte verwendet werden. Ferner stellt es mit seiner Oberfläche Verdampfungsflächen bereit, welche die Verdampfung von in flüssiger Form eingespritztem Zusatzstoff unterstützen. Entsprechendes gilt auch für die durch die Seitengehäuseteile bereitgestellten und mit den Zusatzstoffen in Kontakt tretenden Oberflächen.

## Patentansprüche

1. Abgasmischeranordnung zur Durchmischung von Abgasen einer Brennkraftmaschine mit Zusatzstoff, umfassend einen Abgasströmungskanal (28) mit einem stromaufwärtigen Eintrittsbereich (24) und einem stromabwärtigen Austrittsbereich (26), wobei der Abgasströmungskanal (28) zwischen dem Eintrittsbereich (24) und dem Austrittsbereich (26) wenigstens bereichsweise wendelartig gekrümmt ist, **dadurch gekennzeichnet, dass** ein Mischergehäuse (14) ein Zentralgehäuseteil (18), ein mit dem Zentralgehäuseteil (18) einen vom Eintrittsbereich (24) weg zu einem Durchtrittsbereich (44) in dem Zentralgehäuseteil (18) führenden ersten Strömungskanalbereich (22) begrenzendes erstes Seitengehäuseteil (20) und ein mit dem Zentralgehäuse (18) einen von dem Durchtrittsbereich (44) zum Austrittsbereich (26) führenden zweiten Strömungskanalbereich (50) begrenzendes zweites Seitengehäuseteil (48) umfasst, wobei der erste Strömungskanalbereich (22) des Abgasströmungskanals (28) in einem auf den Eintrittsbereich (24) folgenden ersten Strömungskanalabschnitt (30) im Wesentlichen in einer Strömungskanalebene (E) verläuft und anschließend an den ersten Strömungskanalabschnitt (30) einen durch den Durchtrittsbereich (44) bereitgestellten aus der Strömungskanalebene (E) herausführenden zweiten Strömungskanalabschnitt (46) aufweist.

2. Abgasmischeranordnung nach Anspruch 1, **dadurch gekennzeichnet, dass** im ersten Strömungskanalabschnitt (30) eine Strömungsumlenkung im Bereich von 150° bis 210°, vorzugsweise etwa 180°, erfolgt, oder/und dass im zweiten Strömungskanalabschnitt (46) eine Ablenkung aus der Strömungskanalebene (E) im Bereich 70° bis 110°, vorzugsweise etwa 90°, erfolgt.

3. Abgasmischeranordnung nach einem der Ansprüche 1 oder 2, **dadurch gekennzeichnet, dass** der Durchtrittsbereich (44) wenigstens eine in dem Zentralgehäuseteil (18) ausgebildete Durchtrittsöffnung (42) umfasst.

4. Abgasmischeranordnung nach Anspruch 3, **dadurch gekennzeichnet, dass** die wenigstens eine Durchtrittsöffnung (42) im Bereich einer zylinderartigen oder trichterartigen Ausformung (40) des Zentralgehäuseteils (18) ausgebildet ist.

5. Abgasmischeranordnung nach einem der Ansprüche 1 bis 4, **dadurch gekennzeichnet, dass** der erste Strömungskanalbereich (22) im Wesentlichen den ersten Strömungskanalabschnitt (30) und den zweiten Strömungskanalabschnitt (46) umfasst.

6. Abgasmischeranordnung nach einem der Ansprüche 1 bis 5, **dadurch gekennzeichnet, dass** eine Abgasströmungsrichtung (S_{E}) im Eintrittsbereich (24) im Wesentlichen einer Abgasströmungsrichtung (S_{A}) im Austrittsbereich (26) entspricht.

7. Abgasmischeranordnung nach einem der Ansprüche 1 bis 6, **dadurch gekennzeichnet, dass** eine Zusatzstoffeinspritzanordnung (60) vorgesehen ist zum Einspritzen von Zusatzstoff nahe dem Eintrittsbereich (24) des Abgasströmungskanals (28).

8. Abgasmischeranordnung nach Anspruch 7, **dadurch gekennzeichnet, dass** die Zusatzstoffeinspritzanordnung (60) zum Einspritzen von Zusatzstoff im Wesentlichen in den ersten Strömungskanalabschnitt (30) angeordnet ist.

9. Abgasmischeranordnung nach Anspruch 7 oder 8, **dadurch gekennzeichnet, dass** eine Haupt-Einspritzrichtung (P₄) der Zusatzstoffeinspritzanordnung (60) im Wesentlichen einer Haupt-Strömungsrichtung der Verbrennungsabgase im Abgasströmungskanal (28) im Bereich der Zusatzstoffeinspritzung entspricht.

10. Abgasmischeranordnung nach einem der Ansprüche 1 bis 9, **dadurch gekennzeichnet, dass** der Abgasströmungskanal (28) zwischen dem Eintrittsbereich (24) und dem Austrittsbereich (26) im Wesentlichen eine Windung aufweist.

## Claims

1. Exhaust gas mixer arrangement for mixing exhaust gases of an internal combustion engine with an additive, comprising an exhaust gas flow duct (28) with an inlet area (24) arranged upstream and with a discharge area (26) arranged downstream, wherein the exhaust gas flow duct (28) is bent in a coil-like manner at least in some areas between the inlet area (24) and the discharge area (26), **characterized in that** a mixer housing (14) comprises a central housing part (18), a first side housing part (20) defining with the central housing part (18) a first flow duct area (22) leading away from the inlet area (24) to a passage area (44) and a second side housing part (48) defining with the central housing part (18) a second flow duct area (50) leading from the passage area (44) to the discharge area (26), wherein the first flow duct area (22) of the exhaust gas flow duct (28) runs essentially in a flow duct plane (E) in a first flow duct section (30) following the inlet area (24) and subsequently to the first flow duct section (30) has a second flow duct section (46) provided by the passage area (44) and leading out of the flow duct plane (E).

2. Exhaust gas mixer arrangement in accordance with claim 1, **characterized in that** a deflection of flow in the range of 150° to 210°, preferably about 180°, takes place in the first flow duct section (30), or/and that a deflection out of the flow duct plane (E) in the range of 70° to 110°, preferably about 90°, takes place in the second flow duct section (46).

3. Exhaust gas mixer arrangement in accordance with one of claims 1 or 2, **characterized in that** the passage area (44) comprises at least one passage opening (42) formed in the central housing part (18).

4. Exhaust gas mixer arrangement in accordance with claim 3, **characterized in that** the at least one passage opening (42) is formed in the area of a cylindrical or funnel-like bulge (40) of the central housing part (18).

5. Exhaust gas mixer arrangement in accordance with one of the claims 1 to 4, **characterized in that** the first flow duct area (22) comprises essentially the first flow duct section (30) and the second flow duct section (46).

6. Exhaust gas mixer arrangement in accordance with one of the claims 1 to 5, **characterized in that** an exhaust gas flow direction (S_{E}) in the inlet area (24) essentially corresponds to an exhaust gas flow direction (S_{A}) in the discharge area (26).

7. Exhaust gas mixer arrangement in accordance with one of the claims 1 to 6, **characterized in that** an additive injection arrangement (60) is provided for injecting additive close to the inlet area (24) of the exhaust gas flow duct (28).

8. Exhaust gas mixer arrangement in accordance with claim 7, **characterized in that** the additive injection arrangement (60) for injecting additive is essentially arranged in the first flow duct section (30).

9. Exhaust gas mixer arrangement in accordance with claim 7 or 8, **characterized in that** a main injection direction (P₄) of the additive injection arrangement (60) essentially corresponds to a main flow direction of the combustion waste gases in the exhaust gas flow duct (28) in the area of the additive injection.

10. Exhaust gas mixer arrangement in accordance with one of the claims 1 to 9, **characterized in that** the exhaust gas flow duct (28) has essentially a winding between the inlet area (24) and the discharge area (26).

## Revendications

1. Arrangement de mélangeur de gaz d'échappement pour mélanger des gaz d'échappement d'un moteur à combustion interne avec un additif, comprenant un canal de circulation de gaz d'échappement (28) avec en amont une région d'entrée (24) et en aval une région de sortie (26), le canal de circulation de gaz d'échappement (28) étant au moins partiellement courbé en enroulement entre la région d'entrée (24) et la région de sortie (26), **caractérisé en ce que** un boîtier de mélangeur (14) comprend une partie de boîtier centrale (18), une première partie de boîtier latéral (20) limitant avec la partie de boîtier centrale (18) une première partie de canal de circulation (22) menant de la région d'entrée (24) à une région de passage (44) dans la partie de boîtier centrale (18) et une deuxième partie de boîtier latéral (48) limitant avec la partie de boîtier centrale (18) une deuxième partie de canal de circulation (50) menant de la région de passage (44) à la région de sortie (26), la première partie de canal de circulation (22) du canal de circulation de gaz d'échappement (28) s'étendant dans une première section du canal de circulation (30) suivant la région d'entrée (24) essentiellement dans un plan de canal de circulation (E) et comprenant adjacent à la première section du canal de circulation (30) une deuxième section de canal de circulation (46) prévue par la région de passage (44) sortant du plan de canal de circulation (E).

2. Arrangement de mélangeur de gaz d'échappement selon la revendication 1, **caractérisé en ce que** une déflection de circulation comprise entre 150° et 210°, de préférence d'approximativement 180° a lieu dans la première section du canal de circulation (30), ou/et **en ce que** une déflection du plan de canal de circulation (E) comprise entre 70° et 110°, de préférence d'approximativement 90°, a lieu dans la deuxième section de canal de circulation (46).

3. Arrangement de mélangeur de gaz d'échappement selon une des revendications 1 ou 2, **caractérisé en ce que** la région de passage (44) comprend au moins une ouverture de passage (42) formée dans la partie de boîtier centrale (18).

4. Arrangement de mélangeur de gaz d'échappement selon la revendication 3, **caractérisé en ce que** ladite au moins une ouverture de passage (42) est formée dans la région d'une formation cylindrique ou en forme d'entonnoir (40) de la partie de boîtier centrale (18).

5. Arrangement de mélangeur de gaz d'échappement selon une des revendications 1 à 4, **caractérisé en ce que** la première partie de canal de circulation (22) comprend essentiellement la première section du canal de circulation (30) et la deuxième section de canal de circulation (46).

6. Arrangement de mélangeur de gaz d'échappement selon une des revendications 1 à 5, **caractérisé en ce qu'**un sens de circulation de gaz d'échappement (S_{E}) dans la région d'entrée (24) correspond essentiellement à un sens de circulation de gaz d'échappement (S_{A}) dans la région de sortie (26).

7. Arrangement de mélangeur de gaz d'échappement selon une des revendications 1 à 6, **caractérisé en ce qu'**un arrangement d'injection d'additif (60) est prévu pour injecter l'additif près de la région d'entrée (24) du canal de circulation de gaz d'échappement (28).

8. Arrangement de mélangeur de gaz d'échappement selon la revendication 7, **caractérisé en ce que** l'arrangement d'injection d'additif (60) pour injecter un additif est arrangé essentiellement dans la première section du canal de circulation (30).

9. Arrangement de mélangeur de gaz d'échappement selon les revendications 7 ou 8, **caractérisé en ce qu'**un sens principal d'injection (P₄) de l'arrangement d'injection d'additif (60) correspond essentiellement à un sens principal de circulation des gaz d'échappement dans le canal de circulation de gaz d'échappement (28) dans la région de l'injection d'additif.

10. Arrangement de mélangeur de gaz d'échappement selon une des revendications 1 à 9, **caractérisé en ce que** le canal de circulation de gaz d'échappement (28) comprend essentiellement un enroulement entre la région d'entrée (24) et la région de sortie (26).
